# EUROPEAN PATENT APPLICATION

(11) **EP 4 749 878 A1**
(43) Date of publication of application: **27.05.2026**
(21) Application number: 24847698.8
(22) Date of filing: 10.05.2024
(51) Int. Cl.: H02J 7/34

(54) **ENERGY STORAGE MODULE CONTROL METHOD, APPARATUS, DEVICE, SYSTEM AND ENERGY STORAGE MODULE**

(30) Priority: 28.07.2023 CN 202310948300
(71) Applicant: Contemporary Amperex Future Energy Research Institute (Shanghai) Limited, Shanghai 200241 (CN); Contemporary Amperex Technology Co., Limited, Ningde, Fujian 352100 (CN)
(72) Inventor: LIANG, Liliuyuan, Shanghai 200241 (CN); WEI, Chao, Shanghai 200241 (CN); TU, Qing, Shanghai 200241 (CN); XU, Xiangxiang, Shanghai 200241 (CN); PENG, Hao, Shanghai 200241 (CN); ZONG, Yanyun, Shanghai 200241 (CN); YU, Dongxu, Shanghai 200241 (CN); LU, Yanhua, Shanghai 200241 (CN)
(74) Representative: Gong, Jinping
(86) International application number: PCT/CN2024/092451
(87) International publication number: WO 2025/025733

(57) **Abstract**

The present application discloses an energy storage module control method, an apparatus, a device, a system, and an energy storage module, relating to the field of energy storage technologies. The control method for the energy storage module includes: obtaining a bus current of the energy storage module and an available current of multiple battery branches connected in parallel within the energy storage module; and controlling a target quantity of battery branches among the multiple battery branches to be put into use based on the bus current and the available current of each battery branch. In the embodiments of the present application, the target quantity of battery branches to be put into use among the multiple battery branches is controlled based on the bus current and the available current of each battery branch. This allows the bus current to be actively allocated to the target quantity of battery branches, achieving active allocation of the bus current to reduce current ripple in the battery branches. Additionally, this allows each battery branch put into use to operate close to its available current condition, thereby improving the utilization rate of the battery branches.

## Description

The present application claims priority to Chinese Patent Application No. 202310948300.1, filed with the National Intellectual Property Administration on July 28, 2023 and entitled "ENERGY STORAGE MODULE CONTROL METHOD, APPARATUS, DEVICE, SYSTEM, AND ENERGY STORAGE MODULE", which is incorporated herein by reference in its entirety.

### TECHNICAL FIELD

The present application pertains to the field of energy storage technologies, and in particular, to an energy storage module control method, an apparatus, a device, a system, and an energy storage module.

### BACKGROUND

Among various energy storage technologies, high-voltage direct-coupled energy storage has gained increasing attention and development due to its highly modular structure, which can meet the demands for high efficiency, high reliability, cost-effectiveness, and safety. To enhance the power and capacity of high-voltage direct-coupled energy storage systems, the quantity of cascaded energy storage modules can be increased. For a single energy storage module, multiple batteries are generally connected in parallel to meet capacity requirements.

However, energy storage modules provided by related technologies suffer from the issue of significant current ripple in the batteries.

### TECHNICAL PROBLEM

In view of the above issue, the present application provides an energy storage module control method, an apparatus, a device, a system, and an energy storage module to reduce current ripple in the batteries.

### TECHNICAL SOLUTION

To achieve the above objective, the present application adopts the following technical solutions:

According to a first aspect, an embodiment of the present application provides a control method for an energy storage module, including:
obtaining a bus current of the energy storage module and an available current of multiple battery branches connected in parallel within the energy storage module; and controlling a target quantity of battery branches among the multiple battery branches to be put into use based on the bus current and the available current of each battery branch.

In the technical solution of the embodiment of the present application, the target quantity of battery branches to be put into use among the multiple battery branches is controlled based on the bus current and the available current of each battery branch. This allows the bus current to be actively allocated to the target quantity of battery branches, achieving active allocation of the bus current to reduce current ripple in the battery branches. Additionally, this allows each battery branch put into use to operate close to its available current condition, thereby improving the utilization rate of the battery branches.

In some embodiments, the controlling a target quantity of battery branches among the multiple battery branches to be put into use based on the bus current and the available current of each battery branch includes: determining a total available current of battery branches currently put into use based on the available current of each battery branch and battery branches currently put into use; and increasing or decrease the quantity of battery branches put into use based on the magnitude relationship between the bus current and the total available current. The target quantity is equal to a sum of the quantity of battery branches currently put into use and the quantity of battery branches added into use, or equal to a difference between the quantity of battery branches currently put into use and the quantity of battery branches removed from use.

In the embodiments of the present application, increasing or decreasing the quantity of battery branches put into use based on the magnitude relationship between the bus current and the total available current can reduce current ripple in the battery branches and allow each battery branch put into use to operate close to its available current condition, thereby improving the utilization rate of the battery branches.

In some embodiments, the controlling a target quantity of battery branches among the multiple battery branches to be put into use based on the bus current and the available current of each battery branch includes: determining the target quantity of battery branches required to be put into use among the multiple battery branches based on the bus current and the available current of each battery branch; and controlling the target quantity of battery branches among the multiple battery branches to be put into use based on the target quantity.

In the embodiments of the present application, the target quantity of battery branches required to be put into use is determined among the multiple battery branches based on the bus current and the available current of each battery branch, and then the target quantity of battery branches among the multiple battery branches to be put into use based on the target quantity. This allows for real-time and dynamic control of the target quantity of battery branches to be put into use, actively allocating the bus current to the battery branches put into use in real-time, achieving active allocation of the bus current to reduce current ripple in the battery branches and improve the utilization rate of the battery branches.

In some embodiments, the controlling the target quantity of battery branches among the multiple battery branches to be put into use includes: selecting the target quantity of battery branches to be put into use from among the multiple battery branches based on a put-into-use order of the multiple battery branches.

In the embodiments of the present application, a control device selects the target quantity of battery branches to be put into use based on the put-into-use order of the multiple battery branches, satisfying the requirements of the put-into-use order to achieve corresponding beneficial effects.

In some embodiments, the method for determining the put-into-use order of the multiple battery branches includes: obtaining a first battery state of the multiple battery branches, the first battery state including at least one of state of charge, state of health, and state of energy; and determining the put-into-use order of the multiple battery branches based on the magnitude relationship between the first battery states of respective battery branches.

In the embodiments of the present application, the control device determines the put-into-use order of the multiple battery branches based on the magnitude relationship between the first battery states of respective battery branches and selects the target quantity of battery branches to be put into use based on the put-into-use order of the multiple battery branches, achieving balancing of the first battery state across the battery branches.

In some embodiments, the first battery state includes at least two of state of charge, state of health, and state of energy. The determining the put-into-use order of the multiple battery branches based on the magnitude relationship between the first battery states of respective battery branches includes: determining the first battery state of each battery branch based on the at least two states and the respective weights of the at least two states in the first battery state; and determining the put-into-use order of the multiple battery branches based on the magnitude relationship between the first battery states of respective battery branches.

In the embodiments of the present application, the control device determines the first battery state of each battery branch based on the at least two states and the respective weights of the at least two states in the first battery state, so as to determine the put-into-use order of the multiple battery branches accordingly. This configuration can achieve SOX balancing across the battery branches.

In some embodiments, the controlling a target quantity of battery branches among the multiple battery branches to be put into use based on the bus current and the available current of each battery branch includes: determining an average available current of the multiple battery branches based on the available current of each battery branch; determining the target quantity of battery branches required to be put into use among the multiple battery branches based on the bus current and the average available current; and controlling the target quantity of battery branches among the multiple battery branches to be put into use based on the target quantity.

In the embodiments of the present application, the control device reflects the average charging capacity and/or discharging capacity among the multiple battery branches through the average available current and determines the target quantity of battery branches required to be put into use among the multiple battery branches based on the bus current and the average available current. This allows for overall allocation of the bus current to the target quantity of battery branches, reducing current ripple in the battery branches and improving the utilization rate of the battery branches.

In some embodiments, the determining the target quantity of battery branches required to be put into use among the multiple battery branches based on the bus current and the average available current includes: rounding the quotient of the bus current and the average available current to obtain a first integer; and determining the target quantity of battery branches required to be put into use among the multiple battery branches based on the first integer.

In the embodiments of the present application, the control device determines the target quantity of battery branches required to be put into use among the multiple battery branches through the quotient of the bus current and the average available current, offering the advantages of simple implementation and accurate determination of the target quantity. This configuration can reduce current ripple in the battery branches and improve the utilization rate of the battery branches.

In some embodiments, the available current of the battery branch is determined by a second battery state of the battery branch, the second battery state including at least one of state of charge, temperature, and open-circuit voltage.

In the embodiments of the present application, the control device determines the available current of the battery branch through at least one of state of charge, temperature, and open-circuit voltage, offering the advantage of simple implementation.

In some embodiments, a battery branch includes a battery and a switch connected in series. The controlling the target quantity of battery branches to be put into use among the multiple battery branches includes: among the multiple battery branches, controlling the switches in the target quantity of battery branches to be turned on and control the switches in the battery branches other than the target quantity of battery branches to be turned off.

In the embodiments of the present application, the control device achieves controllability of each battery branch by connecting controllable switches in series in the battery branches, improving the reliability of the energy storage module. For example, when any battery branch experiences an abnormal fault, it can be disconnected through the switch without affecting the operation of other normal battery branches, eliminating the need to shut down the entire energy storage module, thereby improving the reliability of the energy storage module.

According to a second aspect, an embodiment of the present application provides an energy storage module, the energy storage module including multiple battery branches connected in parallel, each battery branch including a switch, and the switch being configured to control whether the battery branch is put into use.

In the embodiments of the present application, switches are provided in the battery branches so as to achieve controllability of each battery branch, improving the reliability of the energy storage module. For example, when any battery branch experiences an abnormal fault, it can be disconnected through the switch without affecting the operation of other normal battery branches, eliminating the need to shut down the entire energy storage module, thereby improving the reliability of the energy storage module.

In some embodiments, the energy storage module is connected to a first measurement module, the battery branch is connected to a second measurement module, the switch is connected to a controller, and the controller is further connected to the first measurement module and the second measurement module. The first measurement module is configured to measure a bus current of the energy storage module. The second measurement module is configured to measure an available current of the multiple battery branches. The controller is configured to, based on the bus current and the available current of each battery branch, control a target quantity of battery branches among the multiple battery branches to be put into use by controlling an on-off state of the switch.

In the embodiments of the present application, active allocation of the bus current to the target quantity of battery branches is achieved through the first measurement module, the second measurement module, and the controller, achieving active allocation of the bus current with the advantage of simple implementation, reducing current ripple in the battery branches. Additionally, this allows each battery branch put into use to operate close to its available current condition, improving the utilization rate of the battery branches.

In some embodiments, the controller includes a calculation module and a driving module, the calculation module being connected to the first measurement module and the second measurement module, and the driving module being connected to the calculation module. The calculation module is configured to, based on the bus current and the available current of each battery branch, determine the target quantity of battery branches required to be put into use among the multiple battery branches. The driving module is configured to, based on the target quantity, control the target quantity of battery branches among the multiple battery branches to be put into use by controlling the on-off state of the switch.

In the embodiments of the present application, the calculation module first determines the target quantity of battery branches required to be put into use, and then the driving module controls the on-off state of the switches, so as to control the target quantity of battery branches among the multiple battery branches to be put into use, offering the advantages of simple implementation and high control efficiency.

In some embodiments, the second measurement module is further configured to determine a put-into-use order of the multiple battery branches. The controller is further connected to the second measurement module. The controller is configured to, based on the put-into-use order of the multiple battery branches, select the target quantity of battery branches to be put into use from among the multiple battery branches.

In the embodiments of the present application, based on the put-into-use order of the multiple battery branches, the target quantity of battery branches to be put into use is selected, satisfying the requirements of the put-into-use order, achieving corresponding beneficial effects.

In some embodiments, the second measurement module is configured to, based on the magnitude relationship between the first battery states of respective battery branches, determine the put-into-use order of the multiple battery branches, the first battery state including at least one of state of charge, state of health, and state of energy.

In the embodiments of the present application, based on the magnitude relationship between the first battery states of respective battery branches, the put-into-use order of the multiple battery branches is determined, ultimately achieving balancing of the first battery state across the battery branches.

According to a third aspect, an embodiment of the present application provides a control apparatus for an energy storage module, including: an acquisition module, configured to obtain a bus current of the energy storage module and an available current of multiple battery branches connected in parallel within the energy storage module; and a control module, configured to control a target quantity of battery branches among the multiple battery branches to be put into use based on the bus current and the available current of each battery branch.

According to a fourth aspect, an embodiment of the present application provides a control device, including a memory, a processor, and a program stored in the memory and executable on the processor, where the processor, when executing the program, implements the control method provided in the first aspect.

According to a fifth aspect, an embodiment of the present application provides an energy storage control system, including an energy storage module and the control device provided in the fourth aspect.

According to a sixth aspect, an embodiment of the present application provides a computer-readable storage medium, and the computer-readable storage medium storing a program, where the program, when executed by a processor, implements the control method provided in the first aspect.

According to a seventh aspect, an embodiment of the present application provides a chip system, the chip system including a processor, where the processor is coupled to a memory, and the processor executes a computer program stored in the memory to implement the control method as described in any item of the first aspect. The chip system may be a single chip or a chip module composed of multiple chips.

According to an eighth aspect, an embodiment of the present application provides a computer program product, when the computer program product runs on a control device, the control device is enabled to execute the control method as described in any item of the first aspect.

It can be understood that the beneficial effects of the third aspect to eighth aspect can refer to the relevant descriptions in the first aspect. Details are not described herein again.

The above description is merely an overview of the technical solutions of the present application. For a better understanding of the technical means in the present application, such that they can be implemented according to the content of the specification, and to make the above and other objectives, features and advantages of the present application more obvious and easier to understand, the following describes specific embodiments of the present application.

### BRIEF DESCRIPTION OF DRAWINGS

Persons of ordinary skill in the art can clearly understand various other advantages and benefits by reading the detailed description of the preferred embodiments below. The accompanying drawings are merely intended to illustrate the preferred embodiments and are not intended to limit the present application. In addition, in all the accompanying drawings, the same reference signs represent the same components. In the accompanying drawings:
FIG. 1 is a schematic diagram of an application scenario of a control method for an energy storage module provided by some embodiments of the present application;
FIG. 2 is a schematic flowchart of a control method for an energy storage module provided by some embodiments of the present application;
FIG. 3 is a schematic structural diagram of an energy storage module provided by some embodiments of the present application;
FIG. 4 is another schematic flowchart of a control method for an energy storage module provided by some embodiments of the present application;
FIG. 5 is another schematic flowchart of a control method for an energy storage module provided by some embodiments of the present application;
FIG. 6 is another schematic flowchart of a control method for an energy storage module provided by some embodiments of the present application;
FIG. 7 is another schematic flowchart of a control method for an energy storage module provided by some embodiments of the present application;
FIG. 8 is another schematic flowchart of a control method for an energy storage module provided by some embodiments of the present application;
FIG. 9 is another schematic flowchart of a control method for an energy storage module provided by some embodiments of the present application;
FIG. 10 is another schematic flowchart of a control method for an energy storage module provided by some embodiments of the present application;
FIG. 11 is another schematic structural diagram of an energy storage module provided by some embodiments of the present application;
FIG. 12 is another schematic flowchart of a control method for an energy storage module provided by some embodiments of the present application;
FIG. 13 is a schematic structural diagram of a control device provided by some embodiments of the present application;
FIG. 14 is a schematic structural diagram of a control apparatus provided by some embodiments of the present application;
FIG. 15 is another schematic structural diagram of a control device provided by some embodiments of the present application;
FIG. 16 is a schematic structural diagram of an MMC energy storage system provided by some embodiments of the present application;
FIG. 17 is a schematic structural diagram of a direct-current direct-connected energy storage system provided by some embodiments of the present application;
FIG. 18 is a schematic structural diagram of an alternating-current direct-connected energy storage system provided by some embodiments of the present application;
FIG. 19 is a schematic structural diagram of a PSC energy storage system provided by some embodiments of the present application;
FIG. 20 is a schematic structural diagram of a full-bridge energy storage module provided by some embodiments of the present application; and
FIG. 21 is a schematic structural diagram of a half-bridge energy storage module provided by some embodiments of the present application.

### DESCRIPTION OF EMBODIMENTS OF THE PRESENT INVENTION

The following describes in detail embodiments of technical solutions of the present application with reference to the accompanying drawings. The following embodiments are merely intended for a clearer description of the technical solutions of the present application and therefore are merely used as examples which do not constitute any limitation on the protection scope of the present application.

Unless otherwise defined, all technical and scientific terms used herein shall have the same meanings as commonly understood by persons skilled in the art to which the present application relates. The terms used herein are intended to merely describe the specific embodiments rather than to limit the present application. The terms "include", "comprise", and "have" and any other variations thereof in the specification, claims and brief description of drawings of the present application are intended to cover non-exclusive inclusions.

In the descriptions of the embodiments of the present application, the technical terms "first", "second", and the like are merely intended to distinguish between different objects, and shall not be understood as any indication or implication of relative importance or any implicit indication of the number, specific sequence, or primary-secondary relationship of the technical features indicated. In the description of the embodiments of the present application, "multiple" means at least two unless otherwise specifically defined.

In this specification, reference to "embodiment" means that specific features, structures, or characteristics described with reference to the embodiment may be included in at least one embodiment of the present application. The term "embodiment" appearing in various places in the specification does not necessarily refer to the same embodiment or an independent or alternative embodiment that is exclusive of other embodiments. It is explicitly or implicitly understood by persons skilled in the art the embodiments described herein may be combined with other embodiments.

In the description of the embodiments of the present application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between contextually associated objects.

In related technologies, an energy storage module generally includes multiple batteries connected in parallel. These batteries can be used to store electrical energy and/or output electrical energy, that is, the energy storage module has a charging, energy storage and/or discharging function.

However, during the operation of the energy storage module, as the bus current of the energy storage module changes, the multiple batteries connected in parallel experience an issue of significant current ripple. Current ripple refers to fluctuations in the magnitude of the current over time while the polarity of the current remains unchanged. The issue of significant current ripple in multiple batteries connected in parallel means that a magnitude fluctuation of the current in at least one battery is greater than a preset value. This issue of significant current ripple can disrupt consistency among batteries and shorten service life of the batteries.

In view of this, an embodiment of the present application provides a control method for an energy storage module. This method is configured to, based on a bus current of the energy storage module and an available current of multiple battery branches connected in parallel within the energy storage module, control a target quantity of battery branches among multiple battery branches to be put into use. This allows that the bus current to be actively allocated to the target quantity of battery branches, achieving the active allocation of the bus current, so as to reduce current ripple in the battery branches. This control method also allows the target quantity of battery branches put into use to operate close to its available current condition, thereby improving the utilization rate of the battery branches.

The batteries in the embodiments of the present application may be secondary batteries. The energy storage module in the embodiments of the present application can be used in various energy storage systems that utilize energy storage modules for energy storage. The energy storage system may include, but is not limited to, a high-voltage direct-coupled energy storage system, a modular multilevel converter (ModularMultilevelConverter, MMC) energy storage system, a power control system (Power Control System, PCS) energy storage system, and the like. The high-voltage direct-coupled energy storage system may include an alternating-current direct-connected energy storage system, a direct-current direct-connected energy storage system, and the like.

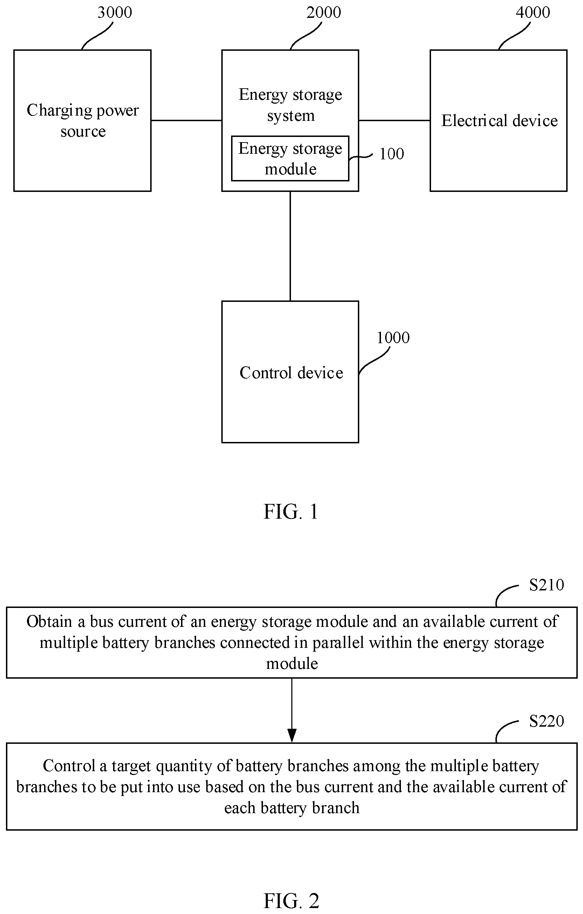

Referring to FIG. 1, FIG. 1 shows a schematic diagram of an application scenario of the control method for an energy storage module provided by this scenario example. The energy storage system 2000 may be a high-voltage direct-coupled energy storage system, an MMC energy storage system, a PCS energy storage system with an energy storage module 100, or the like. The energy storage system 2000 can be configured to perform charging and energy storage through a charging power source 3000 or is configured to provide electrical energy to an electrical device 4000. The electrical device 4000 may include, but is not limited to, an electric toy, an electric tool, an electric bicycle, an electric vehicle, a ship, or a spacecraft. The electric toy may include a fixed or mobile electric toy, for example, a game console, an electric toy car, an electric toy ship, and an electric toy airplane. The spacecraft includes an airplane, a rocket, a space shuttle, a spaceship, and the like. The charging power source 3000 may be a power transmission network of the grid or other charging power sources.

The control method for the energy storage module provided by the embodiments of the present application can be applied to a control device 1000 in FIG. 1. For example, the control device 1000 is connected to the energy storage module 100 in the energy storage system 2000 to control the energy storage module 100 to implement the above control method.

In this scenario example, the control method for the energy storage module is described as applied to the control device 1000. Specifically, the control device 1000 obtains a bus current of the energy storage module 100 and an available current of multiple battery branches within the energy storage module 100. The control device 1000 controls a target quantity of battery branches among the multiple battery branches to be put into use based on the bus current and the available current of each battery branch to reduce current ripple in the battery branches.

In the above scenario example, based on the bus current of the energy storage module 100 and the available current of each battery branch, the bus current is actively allocated to the target quantity of battery branches, achieving active allocation of the bus current, reducing current ripple in the battery branches. Additionally, this allows each battery branch put into use to operate close to its available current condition, improving the utilization rate of the battery branches.

To illustrate the technical solutions described in the present application, specific embodiments are provided below for explanation.

The following describes the control method for the energy storage module provided by the embodiments of the present application, with the control device 1000 as an executing entity.

Referring to FIG. 2, some embodiments of the present application provide a control method for an energy storage module. The control method includes the following steps:

S210: The control device obtains a bus current of the energy storage module and the available current of multiple battery branches connected in parallel within the energy storage module.

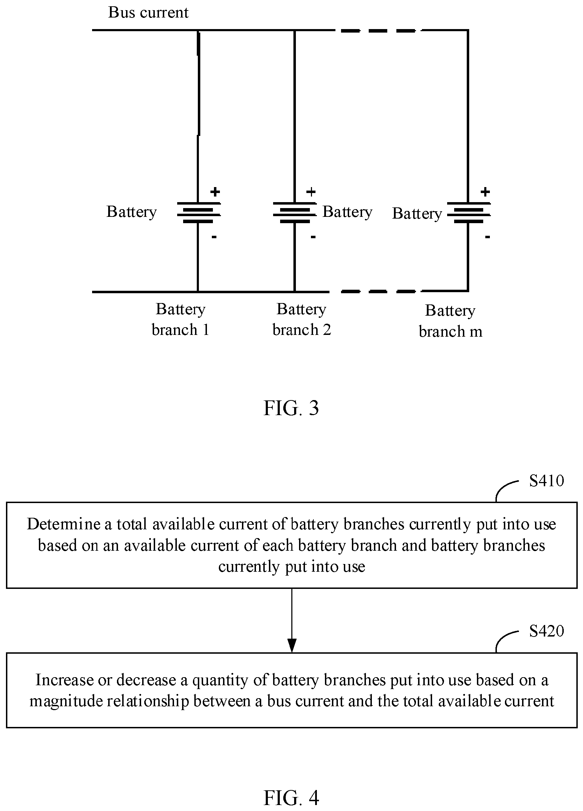

As shown in FIG. 3, in the embodiments of the present application, the energy storage module includes m battery branches connected in parallel, where m is an integer greater than or equal to 2. Each battery branch is provided with a battery, and the function of storing electrical energy and/or outputting electrical energy can be achieved through the battery, that is, the energy storage module can operate in both charging storage mode and discharging mode.

The bus current refers to a sum of the currents of the m battery branches connected in parallel, and is configured to reflect a total charging current and/or total discharging current required by the energy storage module. The available current refers to an allowable discharging current and/or charging current of each battery branch, and is configured to reflect the discharging capacity and/or charging capacity of each battery branch.

In an example, the control device can measure the bus current using a current transformer. In an example, the control device can calculate or obtain the available current of the battery through the state of charge and temperature of the battery using a lookup table method.

It should be noted that the available current of the multiple battery branches connected in parallel refers to the available current of n battery branches, where n is an integer greater than 1 and less than or equal to m.

It should be understood that since the temperature and state of charge of the battery can be measured when the battery is in an open-circuit state, when n equals m, step S210 obtains the available current of m battery branches in the energy storage module, that is, the available current of all battery branches. At this time, m battery branches in the energy storage module can be put into use or only some can be put into use.

When n is less than m, step S210 obtains the available current of some of the m battery branches in the energy storage module, for example, n battery branches are put into use, while m-n battery branches are not put into use.

It should be understood that in different application scenarios, the total charging current and/or total discharging current required by the energy storage module varies. For example, when the power consumption of the electrical device is high or the charging power output by the charging power source is high, the total charging current and/or total discharging current required by the energy storage module is correspondingly high. When the power consumption of the electrical device is low or the charging power output by the charging power source is low, the total charging current and/or total discharging current required by the energy storage module is correspondingly low.

Similarly, in different application scenarios, the allowable discharging current and/or charging current of each battery branch varies. For example, influenced by at least one of the state of charge (State Of Charge, SOC), temperature, heat dissipation capacity, stability, and service life of the battery, the allowable discharging current and/or charging current of the battery branch varies under different conditions of state of charge, temperature, heat dissipation capacity, stability, or service life. For example, when the state of charge of the battery is high, the allowable discharging current of the battery branch is high, while the allowable charging current is low, that is, when the state of charge of the battery is high, the available current of the battery branch during discharging is high, while the available current during charging is low.

S220: The control device controls a target quantity of battery branches among the multiple battery branches to be put into use based on the bus current and the available current of each battery branch.

Based on the above description, the control device, based on the bus current and the available current of each battery branch, that is, based on the total charging current and/or total discharging current required by the energy storage module and the allowable discharging current and/or charging current of each battery branch, controls a target quantity of battery branches to be put into use among the multiple battery branches. This configuration enables the bus current to be actively allocated to the target quantity of battery branches, ensuring that the current ripple of each battery branch put into use is below a preset value, that is, current ripple in the battery branches is reduced. In the embodiments of the present application, the target quantity is less than or equal to m.

In the above control method for the energy storage module, the control device can actively allocate the bus current to the battery branches put into use, achieving active allocation of the bus current to reduce current ripple in the battery branches. Additionally, this allows each battery branch put into use to operate close to its available current condition, improving the utilization rate of the battery branches.

In some embodiments, the control device can monitor the bus current of the energy storage module and the available current of each battery branch in real-time to control the target quantity of battery branches put into use in real-time, thereby controlling the current ripple of the battery branches put into use in real-time to be below the preset value, reducing current ripple in the battery branches. It also controls each battery branch put into use to operate close to its available current condition in real-time, improving the utilization rate of the battery branches.

Referring to FIG. 4, in some embodiments of the present application, the above step S220, that is, the controlling a target quantity of battery branches among the multiple battery branches to be put into use based on the bus current and the available current of each battery branch may include the following steps:

S410: The control device determines a total available current of battery branches currently put into use based on the available current of each battery branch and battery branches currently put into use.

Since the available current of each battery branch is known, the total available current of battery branches currently put into use can be determined by combining battery branches currently put into use, that is, the charging capacity and/or discharging capacity of battery branches currently put into use is determined.

For example, if the quantity of battery branches currently put into use is n, with available currents of i1, i2, ..., in, respectively, and the total available current of battery branches currently put into use is equal to i1 + i2 + ... + in.

S420: The control device increases or decreases the quantity of battery branches put into use based on the magnitude relationship between the bus current and the total available current.

The target quantity in step S220 is equal to a sum of the quantity of battery branches currently put into use and the quantity of battery branches added into use, or equal to a difference between the quantity of battery branches currently put into use and the quantity of battery branches removed from use.

It should be understood that the bus current can be determined to be too high, too low, or appropriate based on the magnitude relationship between the bus current and the total available current.

For example, when a difference between the bus current and the total available current is greater than a first threshold, it indicates that the bus current is too high, requiring an increase in the quantity of battery branches put into use. At this time, the target quantity is equal to the sum of the quantity of battery branches currently put into use and the quantity of battery branches added into use.

For example, when the difference between the total available current and the bus current is greater than a second threshold, it indicates that the bus current is too low, requiring a decrease in the quantity of battery branches put into use. At this time, the target quantity is equal to the difference between the quantity of battery branches currently put into use and the quantity of battery branches removed from use.

For another example, when an absolute value of the difference between the bus current and the total available current is less than a third threshold, it indicates that the bus current is appropriate, requiring the quantity of battery branches put into use to remain unchanged.

The above control method for the energy storage module increases or decreases the quantity of battery branches put into use based on the magnitude relationship between the bus current and the total available current, reducing current ripple in the battery branches and allowing each battery branch put into use to operate close to its available current condition, improving the utilization rate of the battery branches.

In some embodiments, when the difference between the bus current and the total available current is greater than the first threshold, the control device increases the quantity of battery branches put into use by a first preset quantity. For example, the first preset quantity is 1, 2, 3, or another value.

In some embodiments, when the difference between the total available current and the bus current is greater than the second threshold, the control device decreases the quantity of battery branches put into use by a second preset quantity. For example, the second preset quantity is 1, 2, 3, or another value.

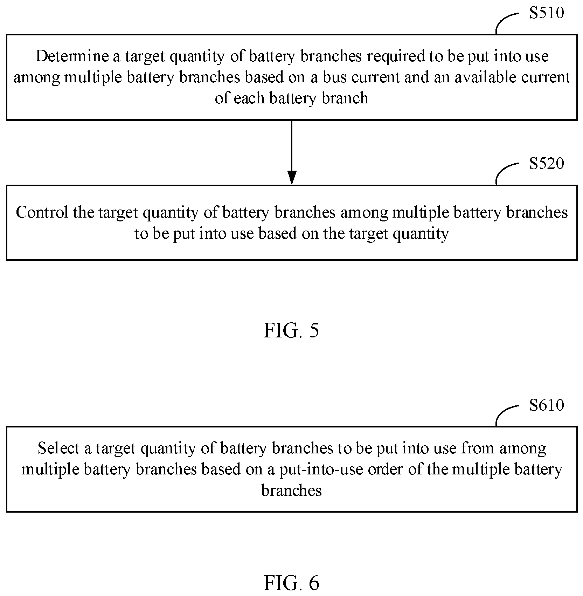

Referring to FIG. 5, in some embodiments of the present application, the above step S220, that is, the controlling a target quantity of battery branches among the multiple battery branches to be put into use based on the bus current and the available current of each battery branch may include the following steps:

S510: The control device determines the target quantity of battery branches required to be put into use among the multiple battery branches based on the bus current and the available current of each battery branch.

Since the bus current reflects the total charging current and/or total discharging current required by the energy storage module, and the available current reflects the discharging capacity and/or charging capacity of each battery branch, the target quantity of battery branches required to be put into use can be determined. For example, the determined target quantity of battery branches ensures that the sum of the available currents of the target quantity of battery branches is greater than or equal to the bus current.

For example, the available currents of m battery branches are i1, i2, ..., im, respectively. The control device selects the target quantity of battery branches such that the sum of the available currents of the target quantity of battery branches is greater than or equal to the bus current, thereby determining the target quantity of battery branches required to be put into use.

S520: The control device controls the target quantity of battery branches among the multiple battery branches to be put into use based on the target quantity.

The above control method for the energy storage module first determines the target quantity of battery branches required to be put into use among the multiple battery branches based on the bus current and the available current of each battery branch, and then controls the target quantity of battery branches to be put into use among the multiple battery branches based on the target quantity. This allows for real-time and dynamic control of the target quantity of battery branches to be put into use, actively allocating the bus current to the battery branches put into use in real-time, achieving active allocation of the bus current to reduce current ripple in the battery branches and improve the utilization rate of the battery branches.

It should be noted that in any of the embodiments shown in FIGs. 2, 4, and 5, the target quantity of battery branches can be arbitrarily selected from the multiple battery branches to be put into use to reduce current ripple in the battery branches and improve the utilization rate of the battery branches. For example, the sum of the available currents of the arbitrarily selected target quantity of battery branches is greater than or equal to the bus current.

Referring to FIG. 6, in some embodiments of the present application, the controlling a target quantity of battery branches among the multiple battery branches to be put into use in step S220 may include the following step:
S610: The control device selects the target quantity of battery branches to be put into use from among the multiple battery branches based on a put-into-use order of the multiple battery branches.

It should be noted that the put-into-use order of the multiple battery branches can be manually set or sorted according to preset rules. For example, the preset rules include, but are not limited to, the numbering of the battery branches, the state of charge of the batteries in the battery branches, the state of health, and the like.

The above control method for the energy storage module allows the control device to select the target quantity of battery branches to be put into use based on the put-into-use order of the multiple battery branches, satisfying the requirements of the put-into-use order to achieve corresponding beneficial effects.

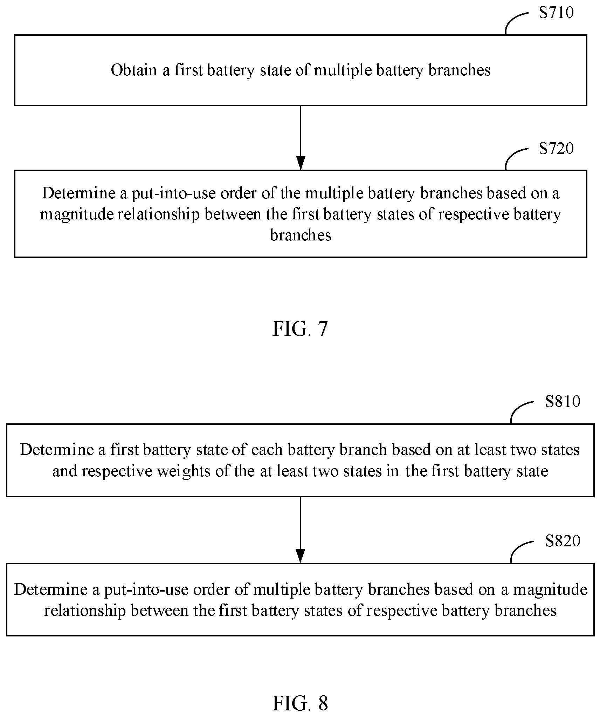

Referring to FIG. 7, in some embodiments of the present application, the method for determining the put-into-use order of the multiple battery branches may include the following steps:
S710: The control device obtains a first battery state of the multiple battery branches.

In the embodiments of the present application, the first battery state of a battery branch can be described by SOX (State of X). The SOX of a battery includes, but is not limited to, SOC (State Of Charge, state of charge), SOH (State Of Health, state of health), and SOE (State of Energy, state of energy).

In the embodiments of the present application, the first battery state includes at least one of state of charge, state of health, and state of energy, that is, SOX includes at least one of SOC, SOH, and SOE.

In the embodiments of the present application, the control device can obtain at least one of SOC, SOH, and SOE using related technologies.

S720: The control device determines the put-into-use order of the multiple battery branches based on the magnitude relationship between the first battery states of respective battery branches.

In the embodiments of the present application, the control device can determine the put-into-use order of the multiple battery branches based on the first battery state of the battery branches, that is, based on the SOX of the battery branches, thereby achieving SOX balancing across the multiple battery branches.

For example, when the energy storage module is in a charging state, the control device controls the target quantity of battery branches with higher SOX to be put into use to achieve SOX balancing across the battery branches.

In an example, the control device can determine the put-into-use order of the multiple battery branches based on one of SOC, SOH, and SOE of each battery branch, thereby achieving SOC, SOH, or SOE balancing across the multiple battery branches.

Using SOC as an example, when the energy storage module is in a discharging state, battery branches with higher SOC are prioritized in the put-into-use order, that is, the control device controls the target quantity of battery branches with higher SOC to be put into use to achieve SOC balancing across the battery branches.

Using SOC as an example, when the energy storage module is in a charging state, battery branches with lower SOC are prioritized in the put-into-use order, that is, the control device controls the target quantity of battery branches with lower SOC to be put into use to achieve SOC balancing across the battery branches.

The above control method for the energy storage module allows the control device to determine the put-into-use order of the multiple battery branches based on the magnitude relationship between the SOX of each battery branch and select the target quantity of battery branches to be put into use based on the put-into-use order of the multiple battery branches, achieving SOX balancing of each battery branch.

Referring to FIG. 8, in some embodiments of the present application, the first battery state includes at least two of state of charge, state of health, and state of energy, that is, SOX includes at least two of SOC, SOH, and SOE.

The above step S720, that is, the determining the put-into-use order of the multiple battery branches based on the magnitude relationship between the first battery states of respective battery branches may include the following steps:
S810: The control device determines the first battery state of each battery branch based on the at least two states and the respective weights of the at least two states in the first battery state.

Since states such as SOC, SOH, and SOE can all be expressed as percentage values, the control device can determine the first battery state of each battery branch based on the at least two states and the respective weights of the at least two states in the first battery state.

For example, SOX includes SOC and SOH. The weight of SOC is a first weight x, the weight of SOH is a second weight y, and a sum of the first weight x and the second weight y is 1. Then, SOX = x*SOC + y*SOH.

S820: The control device determines the put-into-use order of the multiple battery branches based on the magnitude relationship between the first battery states of respective battery branches.

For example, when the energy storage module is in a discharging state, battery branches with higher first battery state SOX are prioritized in the put-into-use order.

For another example, when the energy storage module is in a charging state, battery branches with lower first battery state SOX are prioritized in the put-into-use order.

The above control method for the energy storage module allows the control device to determine the first battery state of each battery branch based on the at least two states and the respective weights of the at least two states in the first battery state and determine the put-into-use order of the multiple battery branches accordingly. This configuration can achieve SOX balancing of each battery branch.

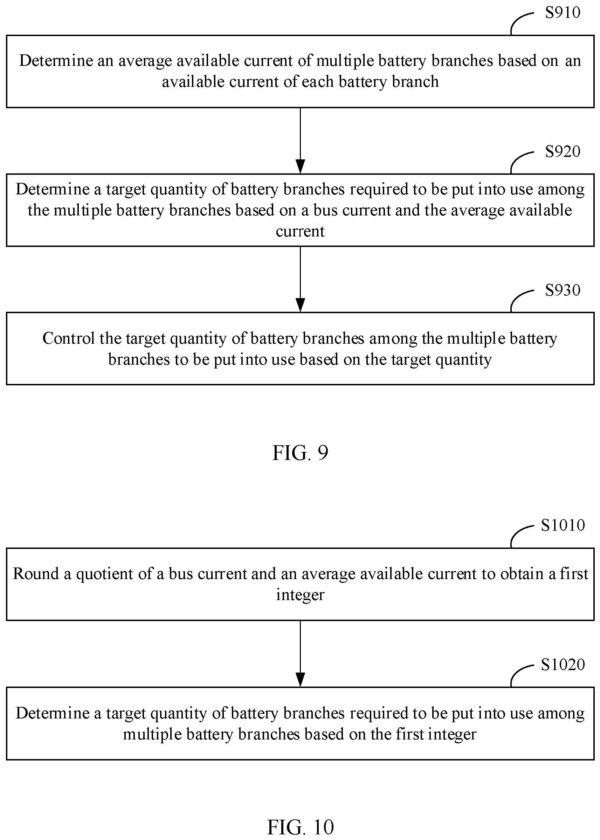

Referring to FIG. 9, in some embodiments of the present application, the above step S220, that is, the controlling a target quantity of battery branches among the multiple battery branches to be put into use based on the bus current and the available current of each battery branch may include the following steps:
S910: The control device determines an average available current of the multiple battery branches based on the available current of each battery branch.

Since the available current of each battery branch is obtained, the control device can calculate and determine the average available current of the multiple battery branches. The average available current is configured to reflect the average charging capacity and/or discharging capacity among the multiple battery branches.

In the embodiments of the present application, the average available current may include, but is not limited to, an arithmetic mean, a geometric mean, mean of squares, a harmonic mean, or a weighted mean of the available currents of the multiple battery branches.

S920: The control device determines the target quantity of battery branches required to be put into use among the multiple battery branches based on the bus current and the average available current.

With the bus current and the average available current known, the target quantity of battery branches required to be put into use can be determined.

S930: The control device controls the target quantity of battery branches among the multiple battery branches to be put into use based on the target quantity.

The above control method for the energy storage module allows the control device to reflect the average charging capacity and/or discharging capacity among the multiple battery branches through the average available current and determine the target quantity of battery branches required to be put into use among the multiple battery branches based on the bus current and the average available current. This enables overall allocation of the bus current to the target quantity of battery branches, reducing current ripple in the battery branches and improving the utilization rate of the battery branches.

Referring to FIG. 10, in some embodiments of the present application, the above step S920, that is, the determining the target quantity of battery branches required to be put into use among the multiple battery branches based on the bus current and the average available current may include the following steps:
S1010: The control device rounds the quotient of the bus current and the average available current to obtain a first integer.

It should be noted that rounding can be divided as rounding up or rounding down, that is, the first integer can be determined using either rounding up or rounding down.

For example, when the quotient of the bus current and the average available current is an integer, the first integer is equal to the quotient.

For another example, when the quotient of the bus current and the average available current is not an integer, that is, including both an integer part and a fractional part, then the first integer obtained by rounding down equals to the integer part of the quotient, and the first integer obtained by rounding up equals to the integer part of the quotient plus 1.

S1020: The control device determines the target quantity of battery branches required to be put into use among the multiple battery branches based on the first integer.

It should be noted that the first integer can be used as the target quantity of battery branches required to be put into use. Alternatively, a sum of the first integer and a preset additional value can be used as the target quantity of battery branches required to be put into use. For example, the preset additional value is 1, 2, 3, or another value.

The above control method for the energy storage module allows the control device to determine the target quantity of battery branches required to be put into use among the multiple battery branches through the quotient of the bus current and the average available current, offering the advantages of simple implementation and accurate determination of the target quantity. This configuration can reduce current ripple in the battery branches and improve the utilization rate of the battery branches.

In some embodiments of the present application, the available current of a battery branch is determined by a second battery state of the battery branch, the second battery state including at least one of state of charge, temperature, and open-circuit voltage.

It should be noted that for a battery, the state of charge, temperature, and open-circuit voltage of the battery can affect the available current of the battery branch.

The above control method for the energy storage module allows the control device to determine the available current of the battery branch through at least one of state of charge, temperature, and open-circuit voltage, offering the advantage of simple implementation.

In some embodiments, when the state of charge and temperature of the battery are known, the control device can determine the available current of the battery branch using a lookup table method.

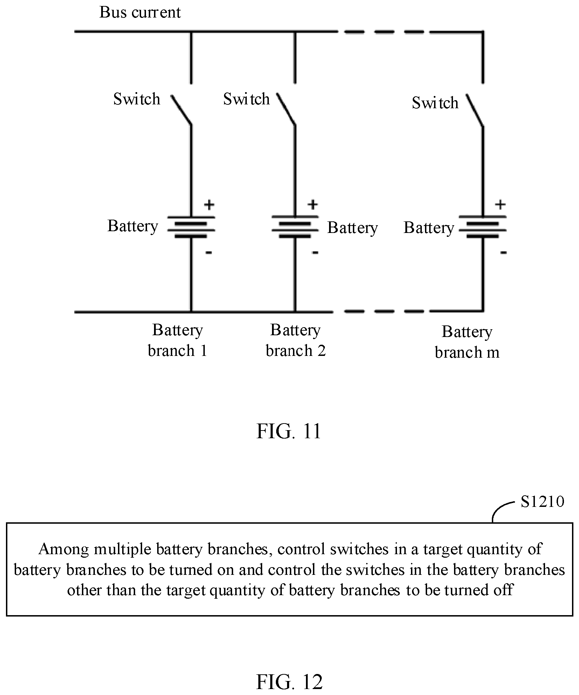

Referring to FIG. 11, in some embodiments of the present application, a battery branch includes a battery and a switch connected in series. When the switch is turned on, it indicates that the battery is put into use. When the switch is turned off, it indicates that the battery is stopped from being used.

Referring to FIG. 12, in the above step S220, the controlling a target quantity of battery branches among the multiple battery branches to be put into use may include the following step:
S1210: The control device, among the multiple battery branches, controls the switches in the target quantity of battery branches to be turned on and controls the switches in the battery branches other than the target quantity of battery branches to be turned off.

The above control method for the energy storage module allows the control device to use controllable switches connected in series in the battery branches to achieve controllability of each battery branch, improving the reliability of the energy storage module. For example, when any battery branch experiences an abnormal fault, it can be disconnected through the switch without affecting the operation of other normal battery branches, eliminating the need to shut down the entire energy storage module, thereby improving the reliability of the energy storage module.

In some embodiments, the switch shown in FIG. 11 may be one or more types of switch devices, such as a metal oxide semiconductor field effect transistor (metal oxide semiconductor field effect transistor, MOSFET), a bipolar junction transistor (bipolar junction transistor, BJT), an insulated gate bipolar transistor (insulated gate bipolar transistor, IGBT), a gallium nitride field effect transistor (GaN), and a silicon carbide (SiC) power tube, which are not listed exhaustively in the embodiments of the present application.

In some embodiments of the present application, an energy storage module is further disclosed. The energy storage module includes multiple battery branches connected in parallel, each battery branch including a switch. The switch is configured to control whether the battery branch is put into use.

Optionally, the switch is configured to connect to a control device, and the control device is configured to control the switch to be turned on or off to enable the battery branch where the switch is located to be put into use or to disconnect the battery branch from use.

The above energy storage module provides switches in the battery branches to achieve controllability of each battery branch, improving the reliability of the energy storage module. For example, when any battery branch experiences an abnormal fault, it can be disconnected through the switch without affecting the operation of other normal battery branches, eliminating the need to shut down the entire energy storage module, thereby improving the reliability of the energy storage module.

In some embodiments of the present application, each battery branch further includes a battery. Optionally, the battery and the switch can be connected in parallel, in series, or in a series-parallel combination.

In an example, each battery branch includes multiple batteries, and the multiple batteries and the switch are connected in a series-parallel combination. For example, multiple batteries are connected in parallel, and then the switch is connected in series with the batteries. For another example, multiple batteries are connected in series, and each battery is connected in parallel with a switch.

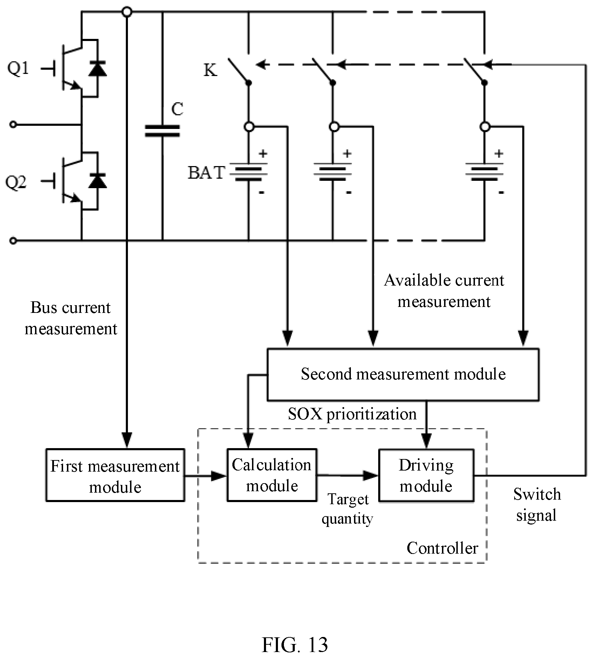

Referring to FIG. 13, in some embodiments of the present application, a specific structure of the energy storage module and the control device is disclosed. The embodiments of the present application are described with the example of a battery branch including a battery and a switch connected in series.

As shown in FIG. 13, the energy storage module includes a battery module and a power module. The battery module includes multiple battery branches connected in parallel, each battery branch including a battery BAT and a switch K connected in series. The power module includes a switch leg and a capacitor C. The switch leg and the capacitor are both connected in parallel with the battery branches. The switch leg includes a switch tube Q1 and a switch tube Q2.

As shown in FIG. 13, the control device includes a first measurement module, a second measurement module, and a controller.

The first measurement module is connected to the energy storage module and is configured to measure the bus current of the energy storage module. For example, the first measurement module can obtain the bus current of the energy storage module in real-time.

The second measurement module is connected to the battery branch, for example, the battery BAT, and is configured to measure the available current of multiple battery branches. For example, the second measurement module can obtain the open-circuit voltage and temperature of the battery BAT in real-time and calculate the state of charge and available current of the battery BAT based on this.

The controller is configured to, based on the bus current and the available current of each battery branch, control the target quantity of battery branches among the multiple battery branches to be put into use by controlling the on-off state of the switch K.

In an example, the controller includes a calculation module and a driving module.

The calculation module is connected to the first measurement module and the second measurement module and is configured to, based on the bus current and the available current of each battery branch, determine the target quantity of battery branches required to be put into use among the multiple battery branches.

The driving module is configured to, based on the target quantity, control the target quantity of battery branches among the multiple battery branches to be put into use by controlling the on-off state of the switch K. For example, the driving module is connected to each switch K and is configured to output switch signals to control the on-off state of each switch K, thereby controlling the target quantity of battery branches among the multiple battery branches to be put into use.

In an example, the second measurement module is further configured to, based on the available current of the battery BAT, determine the average available current of the multiple battery branches. Thus, in some examples, the calculation module is configured to, based on the quotient of the bus current and the average available current, determine the target quantity of battery branches required to be put into use.

In an example, the second measurement module is further configured to, based on the state of charge of the battery BAT, determine the SOX prioritization of the multiple battery branches. The driving module is further connected to the second measurement module. Thus, in some examples, the driving module is configured to, based on the SOX prioritization, control the switches K in the target quantity of battery branches with higher SOX prioritization to be turned on and control the switches K in the battery branches other than the target quantity of battery branches to be turned off.

In an example, the second measurement module is configured to, based on the magnitude relationship between the first battery states of respective battery branches, determine the put-into-use order of the multiple battery branches, the first battery state including at least one of state of charge, state of health, and state of energy.

Based on the above description, the control method for the energy storage module in the embodiments of the present application includes the following steps:
S11: The control device obtains the bus current of the energy storage module through the first measurement module.
S12: The control device obtains the average available current and SOX prioritization of the multiple battery branches through the second measurement module. Step S12 and step S11 are not performed in a particular order.
S13: The control device rounds the quotient of the bus current of the energy storage module and the average available current of the multiple battery branches through the calculation module and determines the target quantity of battery branches required to be put into use based on this.
S14: Based on the SOX prioritization, the control device controls the switches K in the target quantity of battery branches with higher SOX prioritization to be turned on and controls the switches K in the battery branches other than the target quantity of battery branches to be turned off through the driving module.

The above control method for the energy storage module allows the control device to actively allocate the bus current to the target quantity of battery branches, achieving active allocation of the bus current to reduce current ripple in the battery branches. Additionally, the control device can make each battery branch put into use operate close to its available current condition, improving the utilization rate of the battery branches.

It should be understood that the sequence numbers of the steps in the above embodiments do not imply the order of execution, and the execution order of each process should be determined by its function and internal logic, and should not be construed as any limitation on the implementation processes of the embodiments of the present application.

In some embodiments of the present application, a control apparatus for an energy storage module is provided, including modules for performing the method steps in any of the above method embodiments.

For the process of each module in the control apparatus for the energy storage module provided by the embodiments of the present application implementing its respective function, reference can be made to the description of the embodiment shown in FIG. 2 and other related method embodiments. Details are not described herein again.

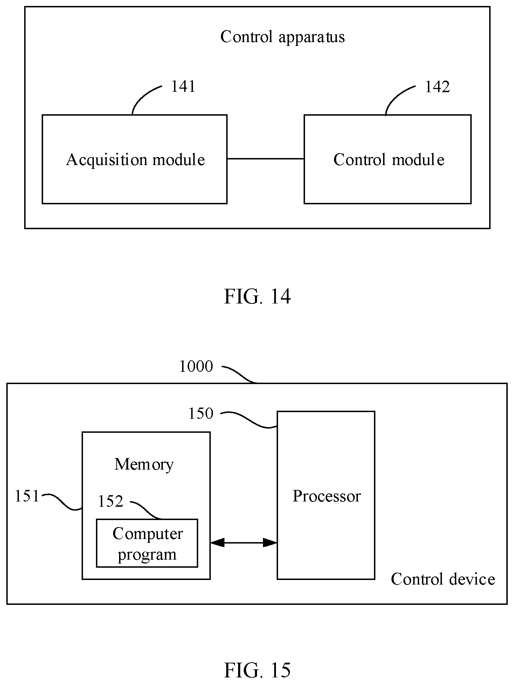

As shown in FIG. 14, in some embodiments of the present application, the control apparatus includes an acquisition module 141 and a control module 142.

The acquisition module 141 is configured to obtain a bus current of the energy storage module and an available current of multiple battery branches connected in parallel within the energy storage module. The control module 142 is configured to control a target quantity of battery branches among the multiple battery branches to be put into use based on the bus current and the available current of each battery branch.

The above control apparatus for the energy storage module also has the above beneficial effects, that is, the bus current can be actively allocated to the battery branches put into use, achieving active allocation of the bus current to reduce current ripple in the battery branches. Additionally, this allows each battery branch put into use to operate close to its available current condition, improving the utilization rate of the battery branches.

FIG. 15 is a schematic structural diagram of a control device provided by an embodiment of the present application. As shown in FIG. 15, the control device 1000 of this embodiment includes: at least one processor 150 (only one is shown in FIG. 15) and a memory 151, where the memory 151 stores a computer program 152 executable on the processor 150. The processor 150, when executing the computer program 152, implements the steps in the control method embodiments for the energy storage module, such as steps S210 to S220 shown in FIG. 2.

The control device 1000 may include, but is not limited to, a battery management system, a mobile phone, a desktop computer, a laptop, a handheld computer, a cloud server, and the like. The control device may include, but is not limited to, a processor 150 and a memory 151. Persons skilled in the art can understand that FIG. 15 is merely an example of the control device 1000 and does not constitute a limitation on the control device 1000, which may include more or fewer components than shown, or combine certain components, or have different components. For example, the control device may also include an input sending device, a network access device, buses, and the like.

The processor 150 may be a central processing unit (Central Processing Unit, CPU), or another general-purpose processor, a digital signal processor (Digital Signal Processor, DSP), an application specific integrated circuit (Application Specific Integrated Circuit, ASIC), a field-programmable gate array (Field-Programmable Gate Array, FPGA), or other programmable logic devices, discrete gate or transistor logic devices, discrete hardware components, or the like. The general-purpose processor may be a microprocessor, or the processor may be any conventional processor, or the like.

In some embodiments, the memory 151 may be an internal storage unit of the control device 1000, such as a hard disk or memory of the control device 1000. The memory 151 may also be an external storage device of the control device 1000, such as a plug-in hard disk, smart media card (Smart Media Card, SMC), secure digital (Secure Digital, SD) card, flash card (Flash Card), or the like, equipped on the control device 1000. Further, the memory 151 may include both the internal storage unit and the external storage device of the control device 1000. The memory 151 is configured to store an operating system, an application, a bootloader (BootLoader), data, and other programs, such as the program code of the computer program. The memory 151 can also be configured to temporarily store data that has been sent or is to be sent.

In some embodiments of the present application, an energy storage control system is provided, including an energy storage module and the control device 1000 shown in FIG. 15.

In some embodiments, the energy storage control system includes the energy storage system 2000 provided with the energy storage module 100 as shown in FIG. 1 and the control device 1000.

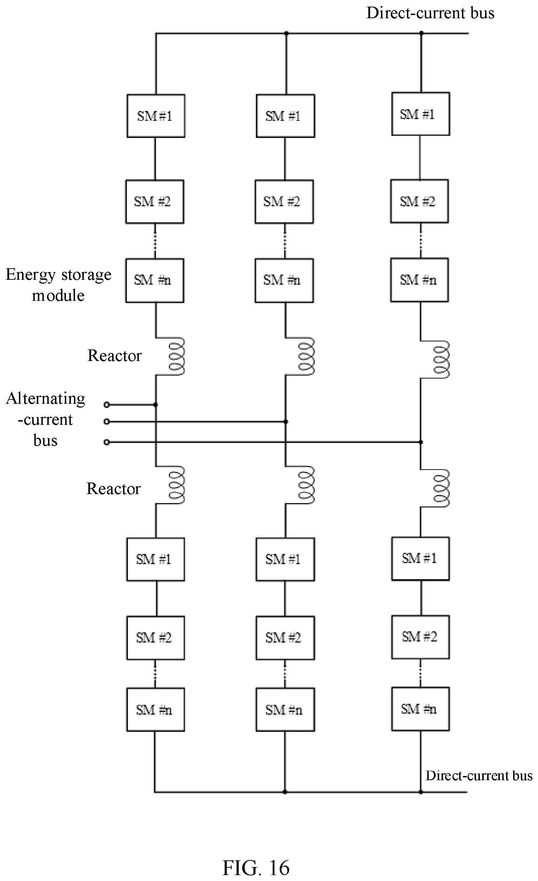

In some embodiments, the energy storage control system includes an MMC energy storage system provided with the energy storage module as shown in FIG. 16.

Specifically, in FIG. 16, SM#1, SM#2, ..., SM#n are all energy storage modules. Optionally, these energy storage modules are full-bridge energy storage modules or half-bridge energy storage modules.

In an example, the MMC energy storage system shown in FIG. 16 has a three-phase alternating-current bus. Each phase of the alternating-current bus is connected to symmetrically arranged upper and lower energy storage modules and reactors.

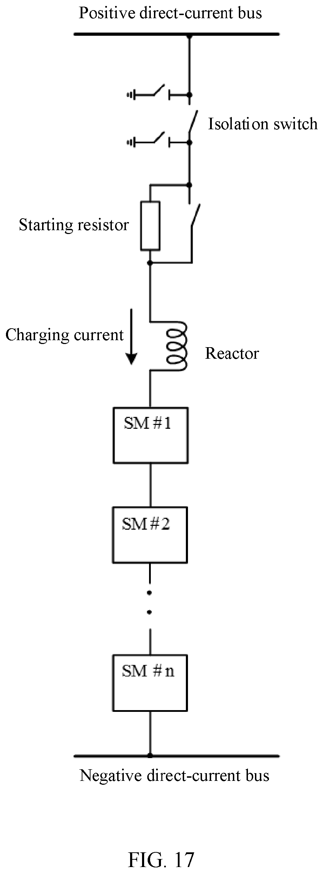

In some embodiments, the energy storage control system includes the direct-current direct-connected energy storage system provided with the energy storage module as shown in FIG. 17.

Specifically, in FIG. 17, SM#1, SM#2, ..., SM#n are all energy storage modules. Optionally, these energy storage modules are full-bridge energy storage modules or half-bridge energy storage modules.

In an example, the direct-current direct-connected energy storage system shown in FIG. 17 further includes a reactor, a starting resistor, and an isolation switch connected in series with the energy storage module.

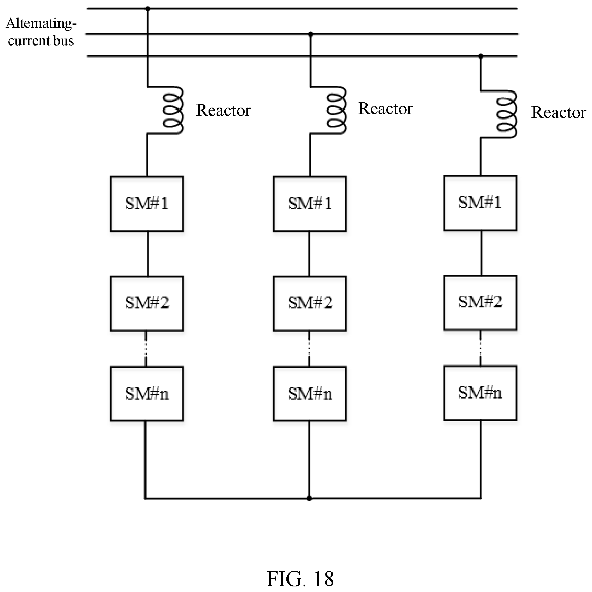

In some embodiments, the energy storage control system includes the alternating-current direct-connected energy storage system with the energy storage module as shown in FIG. 18.

Specifically, in FIG. 18, SM#1, SM#2, ..., SM#n are all energy storage modules. Optionally, these energy storage modules are full-bridge energy storage modules or half-bridge energy storage modules.

In an example, the alternating-current direct-connected energy storage system shown in FIG. 18 has a three-phase alternating-current bus. Each phase of the alternating-current bus is connected to an energy storage module and a reactor.

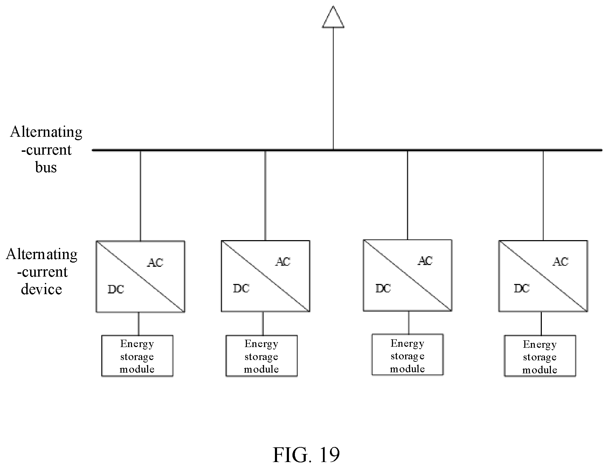

In some embodiments, the energy storage control system includes a PSC energy storage system provided with the energy storage module as shown in FIG. 19. Optionally, the structure of the energy storage module is as shown in FIG. 11.

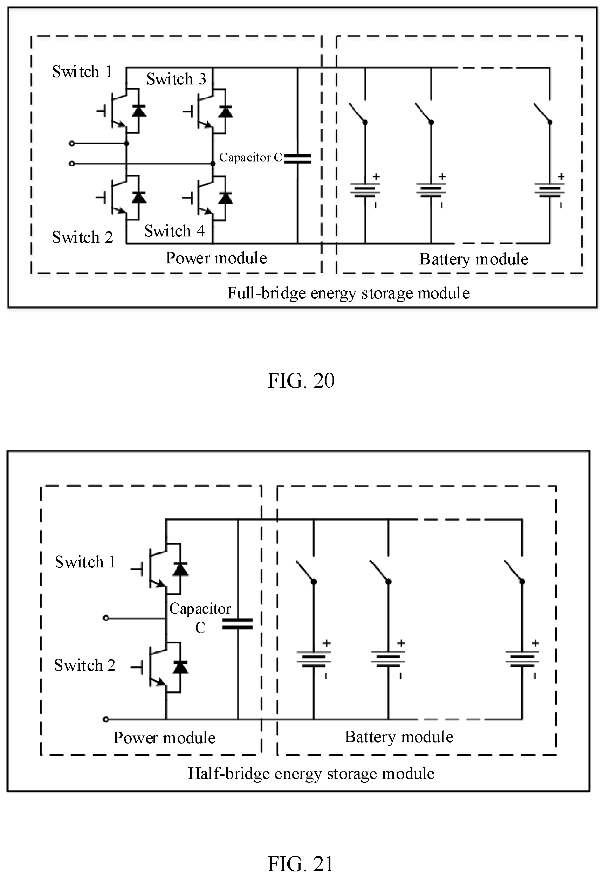

In an example, the structure of a full-bridge energy storage module is as shown in FIG. 20. For example, the full-bridge energy storage module includes a power module and a battery module. The battery module includes multiple battery branches connected in parallel. The power module includes two switch legs and a capacitor C. The capacitor C is connected in parallel with the battery branches, and the two switch legs are respectively connected in parallel with the capacitor C.

In an example, the structure of a half-bridge energy storage module is as shown in FIG. 21. For example, the half-bridge energy storage module includes a power module and a battery module. The battery module includes multiple battery branches connected in parallel. The power module includes one switch leg and a capacitor C. The capacitor C is connected in parallel with the battery branches, and the one switch leg is connected in parallel with the capacitor C.

In some embodiments of the present application, a computer-readable storage medium is also provided, the computer-readable storage medium storing a computer program, where the computer program, when executed by a processor, implements the steps in any of the above method embodiments.

In some embodiments of the present application, a computer program product is also provided, where when the computer program product runs on a control device, the control device is enabled to execute the steps in any of the above method embodiments.

In some embodiments of the present application, a chip system is also provided, the chip system including a processor, where the processor is coupled to a memory, and the processor executes a computer program stored in the memory to implement the steps in any of the above method embodiments. For example, the chip system may be a single chip or a chip module composed of multiple chips.

In the above embodiments, the descriptions of each embodiment have their own emphases, and parts not detailed or described in one embodiment can refer to the relevant descriptions of other embodiments.

Persons of ordinary skill in the art will appreciate that the units and algorithm steps of various examples described with reference to the embodiments disclosed in this specification can be implemented by using electronic hardware or a combination of computer software and electronic hardware. Whether the functions are executed by hardware or software depends on particular applications and design constraints of the technical solutions. Persons skilled in the art can employ a different method to implement the described functions for each particular application, but such implementations shall not be construed as going beyond the scope of the present application.

The units described as separate parts may or may not be physically separated. Parts displayed as units may or may not be physical units, meaning they may be located in one position or distributed on a plurality of network units. Some or all of the units may be selected depending on actual requirements to achieve the objectives of the solutions in the embodiments.

The above embodiments are merely intended to describe the technical solutions of the present application, are not intended to limit the present application. Although the present application is described in detail with reference to the foregoing embodiments, persons of ordinary skill in the art should understand that modifications can be made to the technical solutions described in the foregoing embodiments, or equivalent substitutions can be made to some technical features therein, and these modifications or substitutions do not make the essence of the corresponding technical solutions depart from the scope of the technical solutions of some embodiments of the present application. All such modifications and replacements shall fall within the scope of the present application.

## Claims

1. An energy storage module, the energy storage module comprising multiple battery branches connected in parallel, each battery branch comprising a switch, and the switch being configured to control whether the battery branch is put into use.

2. The energy storage module according to claim 1, wherein the energy storage module is connected to a first measurement module, the battery branch is connected to a second measurement module, the switch is connected to a controller, and the controller is further connected to the first measurement module and the second measurement module;
the first measurement module is configured to measure a bus current of the energy storage module, and the second measurement module is configured to measure an available current of the multiple battery branches; and
the controller is configured to, based on the bus current and the available current of each battery branch, control a target quantity of battery branches among the multiple battery branches to be put into use by controlling an on-off state of the switch.

3. The energy storage module according to claim 2, wherein the controller comprises a calculation module and a driving module, the calculation module being connected to the first measurement module and the second measurement module, and the driving module being connected to the calculation module;
the calculation module is configured to, based on the bus current and the available current of each battery branch, determine the target quantity of battery branches required to be put into use among the multiple battery branches; and
the driving module is configured to, based on the target quantity, control the target quantity of battery branches among the multiple battery branches to be put into use by controlling the on-off state of the switch.

4. The energy storage module according to claim 2 or 3, wherein the second measurement module is further configured to determine a put-into-use order of the multiple battery branches, and the controller is further connected to the second measurement module; and
the controller is configured to, based on the put-into-use order of the multiple battery branches, select the target quantity of battery branches to be put into use from among the multiple battery branches.

5. The energy storage module according to claim 4, wherein the second measurement module is configured to, based on the magnitude relationship between the first battery states of respective battery branches, determine the put-into-use order of the multiple battery branches, the first battery state comprising at least one of state of charge, state of health, and state of energy.

6. A control method for an energy storage module, comprising:
obtaining a bus current of the energy storage module and an available current of multiple battery branches connected in parallel within the energy storage module; and
controlling a target quantity of battery branches among the multiple battery branches to be put into use based on the bus current and the available current of each battery branch.

7. The control method according to claim 6, wherein the controlling a target quantity of battery branches among the multiple battery branches to be put into use based on the bus current and the available current of each battery branch comprises:
determining a total available current of battery branches currently put into use based on the available current of each battery branch and battery branches currently put into use; and
increasing or decreasing the quantity of battery branches put into use based on the magnitude relationship between the bus current and the total available current, wherein the target quantity is equal to a sum of the quantity of battery branches currently put into use and the quantity of battery branches added into use, or equal to a difference between the quantity of battery branches currently put into use and the quantity of battery branches removed from use.

8. The control method according to claim 6 or 7, wherein the controlling a target quantity of battery branches among the multiple battery branches to be put into use based on the bus current and the available current of each battery branch comprises:
determining the target quantity of battery branches required to be put into use among the multiple battery branches based on the bus current and the available current of each battery branch; and
controlling the target quantity of battery branches among the multiple battery branches to be put into use based on the target quantity.

9. The control method according to any one of claims 6 to 8, wherein the controlling the target quantity of battery branches among the multiple battery branches to be put into use comprises:
selecting the target quantity of battery branches to be put into use from among the multiple battery branches based on a put-into-use order of the multiple battery branches.

10. The control method according to claim 9, wherein the method for determining the put-into-use order of the multiple battery branches comprises:
obtaining a first battery state of the multiple battery branches, the first battery state comprising at least one of state of charge, state of health, and state of energy; and
determining the put-into-use order of the multiple battery branches based on the magnitude relationship between the first battery states of respective battery branches.

11. The control method according to claim 10, wherein the first battery state comprises at least two of state of charge, state of health, and state of energy;
the determining the put-into-use order of the multiple battery branches based on the magnitude relationship between the first battery states of respective battery branches comprises:
determining the first battery state of each battery branch based on the at least two states and the respective weights of the at least two states in the first battery state; and
determining the put-into-use order of the multiple battery branches based on the magnitude relationship between the first battery states of respective battery branches.

12. The control method according to any one of claims 6 to 11, wherein the controlling a target quantity of battery branches among the multiple battery branches to be put into use based on the bus current and the available current of each battery branch comprises:
determining an average available current of the multiple battery branches based on the available current of each battery branch;
determining the target quantity of battery branches required to be put into use among the multiple battery branches based on the bus current and the average available current; and
controlling the target quantity of battery branches among the multiple battery branches to be put into use based on the target quantity.

13. The control method according to claim 12, wherein the determining the target quantity of battery branches required to be put into use among the multiple battery branches based on the bus current and the average available current comprises:
rounding the quotient of the bus current and the average available current to obtain a first integer; and
determining the target quantity of battery branches required to be put into use among the multiple battery branches based on the first integer.

14. The control method according to any one of claims 6 to 13, wherein the available current of the battery branch is determined by a second battery state of the battery branch, the second battery state comprising at least one of state of charge, temperature, and open-circuit voltage.

15. The control method according to any one of claims 6 to 14, wherein the battery branch comprises a battery and a switch connected in series;
the controlling the target quantity of battery branches among the multiple battery branches to be put into use comprises:
among the multiple battery branches, controlling the switches in the target quantity of battery branches to be turned on and controlling the switches in the battery branches other than the target quantity of battery branches to be turned off.

16. A control apparatus for an energy storage module, comprising:
an acquisition module, configured to obtain a bus current of the energy storage module and an available current of multiple battery branches connected in parallel within the energy storage module; and
a control module, configured to control a target quantity of battery branches among the multiple battery branches to be put into use based on the bus current and the available current of each battery branch.

17. A control device, comprising a memory, a processor, and a program stored in the memory and executable on the processor, wherein the processor, when executing the program, implements the control method according to any one of claims 6 to 15.

18. An energy storage control system, comprising an energy storage module and the control device according to claim 17.

19. A computer-readable storage medium, the computer-readable storage medium storing a program, wherein the program, when executed by a processor, implements the control method according to any one of claims 6 to 15.
